# EUROPEAN PATENT APPLICATION

(11) **EP 2 804 282 A1**
(43) Date of publication of application: **19.11.2014**
(21) Application number: 14165931.8
(22) Date of filing: 25.04.2014
(51) Int. Cl.: H02J 3/14, H02J 13/00

(54) **Device control apparatus, device control method, and device control system**

(30) Priority: 14.05.2013 JP 2013102618
(71) Applicant: FUJITSU LIMITED, Kawasaki-shi, Kanagawa 211-8588 (JP)
(72) Inventor: Kakuta, Jun, Kawasaki-shi, Kanagawa 211-8588 (JP)
(74) Representative: Fenlon, Christine Lesley

(57) **Abstract**

A device control apparatus controls devices. The device control apparatus includes a storage unit, a specification unit, and a control unit.

The storage unit stores operational sensor change information in which a controlled device, operation status of the controlled device, and change attribute of the controlled device set based on sensor information obtained by collecting a change in sensor measured value at regular time intervals, are associated with one another. The specification unit specifies a conflicting device that conflicts with the controlled device in the change attribute related to the operation status, based on the operational sensor change information. The control unit controls the specified conflicting device to interpolate the contents of the request so as to eliminate the competition in the operation status between the conflicting device and the controlled device, and then executes the interpolated request.

## Description

The embodiments discussed herein are related to a device control apparatus, a device control method, and a device control system.

To counter the problem of global warming, the Japanese government has encouraged the use of energy-saving home electrical appliances by providing preferential treatment. As a result, there has been widely used in households a large number of energy-saving home electronics mainly including appliances with large power consumption, such as air-conditioners, refrigerators, personal computers, and televisions. Further, in response to the social situation of unreliable power supply, there has recently been a wider view of energy conservation in entire housing facilities. This has facilitated the proliferation of smart houses in which the operations of electronic appliances are integrally controlled.

During the initial proliferation of smart houses, HEMS (Home Energy Management System) offering visualizations of power consumption amount and the like was mainly used to encourage energy saving in households, but in the future, it is considered that device control for compatibility between energy efficiency and housing comfort will become mainstream. In households, a plurality of services such as room temperature adjustment, illuminance adjustment, health care, home security, Adult Care Service is actually used to control each of electronic appliances over a network for the purposes of saving energy and increasing comfort of residential place.

However, on control of an electronic appliance by a service, a conflicting device may work in the state contrary to the working of the controlled device. At that time, when only the target device is controlled by the service, there may raise an inconsistency between the operation status of the conflicting device and the controlled device after completion of the control. For example, if the controlled device is an air-conditioner and the conflicting device is an power window, when the air-conditioner is to be controlled by a comfort control service to lower the room temperature by cooling operation in the summer season, if the power window is open in the same room as the air-conditioner is, warm air enters the room from the outside to interfere with the cooling operation of the air-conditioner.

Therefore, if the operation status of the conflicting device does not match the operation status of the controlled device appropriately, the service for controlling each of the electronic appliances may control the conflicting device before the control of the controlled device. For example, if the power window is open in the room equipped with the air-conditioner by a ventilation service, the comfort service operates to control the power window as a conflicting device and then start the operation of the airconditioner. In addition, if a curtain is closed in the room equipped with a lighting device during the day by an illuminance adjustment service, HEMS operates to open the curtain and then adjust the illuminance of the lighting device. In such a manner as described above, if the operation status of the conflicting device does not match the operation status of the controlled device appropriately, the smart house is configured to control the conflicting device.
Patent Literature 1: Japanese Laid-open Patent Publication No. 2007-124240
Patent Literature 2: Japanese Laid-open Patent Publication No. 2012-195664

However, smart houses have a problem that no appropriate control can be made on the conflicting device.

When controlling the controlled device, the service is configured to perform exclusive control on the conflicting device so as not to accept any operation on the conflicting device, it is not possible to eliminate an inconsistency between operation statuses of the controlled device and the conflicting device. For example, on starting of the cooling operation of the airconditioner in the summer season by the comfort control service, even if exclusive control is performed on operation on the power window as the conflicting device of the air-conditioner, the power window may be locked in the open state.

An integrated system controlling a plurality of devices associates controlled devices and conflicting devices in a database or the like to comprehend the conflicting devices corresponding to the controlled devices. When a new electronic appliance is installed in a household, the integrated system registers a conflicting device corresponding to the electronic appliance in the database. Accordingly, each time an electric appliance is installed in the household, the integrated system adds the item to the database.

Accordingly, it is an aim of embodiments of the invention to provide a device control apparatus, a device control method, and a device control system to perform appropriate control on conflicting devices.

According to an embodiment, a device control apparatus includes a storage unit that stores operational sensor change information in which a controlled device, operation status of the controlled device, and change attribute of the controlled device set based on sensor information obtained by collecting a change in sensor measured value at regular time intervals, are associated with one another;
a specification unit that, upon acceptance of a request for control of the controlled device, specifies a conflicting device that conflicts with the controlled device in the change attribute related to the operation status, based on the operational sensor change information; and
a control unit that controls the specified conflicting device to interpolate the contents of the request so as to eliminate the conflict in the operation status between the conflicting device and the controlled device, and then executes the interpolated request. The scope of the invention is defined by the claims

The invention is further described, by way of example only, with reference the following figures in which:
FIG. 1 is a functional block diagram illustrating a configuration of a device control apparatus according to a first embodiment;
FIG. 2 is a diagram for describing sensor information on room temperatures measured using a thermometer while an air-conditioner is powered off;
FIG. 3 is a diagram for describing sensor information on room temperatures measured using a thermometer while an power window is open;
FIG. 4 is a diagram for describing a change value table presenting a change value of sensor measured value as a criteria for determining whether there is any change in change attribute;
FIG. 5 is a diagram for describing operational sensor change information indicative of change attributes of the air-conditioner and the power window;
FIG. 6 is a diagram for describing a device ID list of devices with change attributes to be acquired;
FIG. 7 is a diagram for describing device operation information indicative of the times when the operation status of the air-conditioner was changed;
FIG. 8 is a diagram for describing device operation information indicative of the times when the operation status of the power window was changed;
FIG. 9 is a diagram for describing device operation information indicative of the operation statuses of the airconditioner and the power window;
FIG. 10 is a diagram for describing device operation information indicative of the case where the air conditioner was powered off and then the power window was opened;
FIG. 11 is a diagram for describing device operation information indicative of the case where the power window was closed and then the air conditioner was powered on;
FIG. 12 is a diagram for describing a flow of a process for creating operational sensor change information;
FIG. 13 is a flow diagram for describing a process for controlling a controlled device having a conflicting device;
FIG. 14 is a functional block diagram illustrating a configuration of a device control apparatus according to a second embodiment;
FIG. 15 is a diagram illustrating one example of a data structure related to monitoring time information;
FIG. 16 is a functional block diagram illustrating a configuration of a device control apparatus according to a third embodiment;
FIG. 17 is a diagram illustrating one example of a data structure related to profile information;
FIG. 18 is a flow diagram for describing a flow of a process for controlling a controlled device in the case where a storage unit has profile information;
FIG. 19 is a functional block diagram illustrating a configuration of a device control apparatus according to a fourth embodiment;
FIG. 20 is a diagram illustrating one example of a data structure related to priority order information;
FIG. 21 is a flow diagram for describing a flow of a process for controlling a controlled device in the case where the storage unit has priority order information;
FIG. 22 is a diagram illustrating one example of operational sensor change information corresponding to summer season or afternoon;
FIG. 23 is a diagram illustrating one example of operational sensor change information corresponding to winter season;
FIG. 24 is a flow diagram for describing a flow of a process for creating operational sensor change information corresponding to season or time zone;
FIG. 25 is a flow diagram for describing a flow of a process for controlling a controlled device based on the operational sensor change information corresponding to season or time zone; and
FIG. 26 is a diagram illustrating one example of a system configuration according to a device control system.

Preferred embodiments of the present invention will be explained with reference to accompanying drawings.

However, the present invention is not limited to the embodiments. The embodiments can be appropriately combined as far as there is no inconsistency between processes of the embodiments.

### [a] First Embodiment

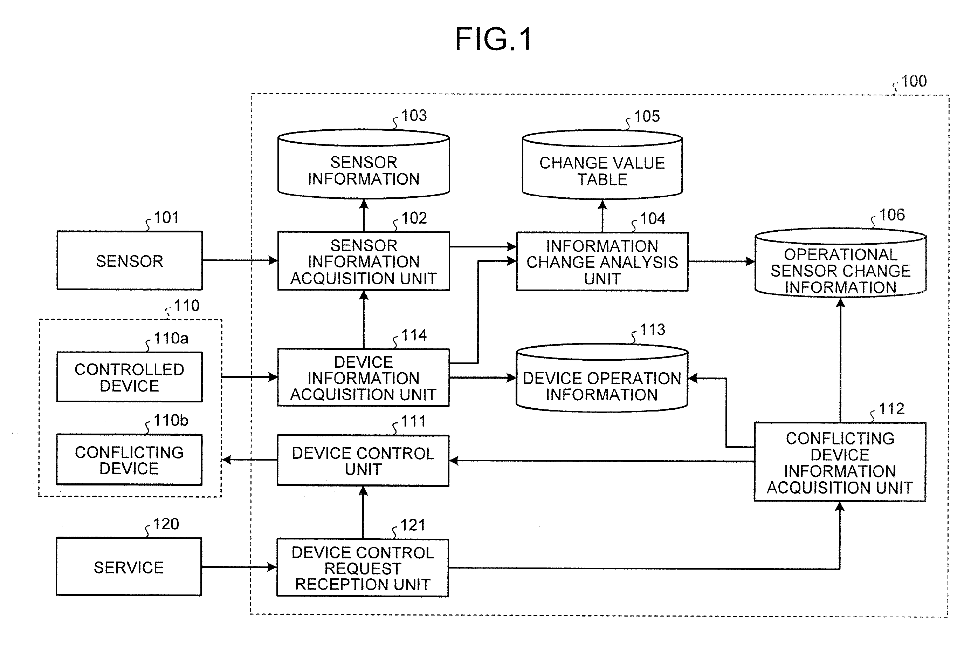

One example of a functional configuration of a device control apparatus according to a first embodiment will be described. FIG. 1 is a functional block diagram illustrating a configuration of a device control apparatus according to the first embodiment. As illustrated in FIG. 1, in a device control apparatus 100, a control unit includes a sensor information acquisition unit 102, an information change analysis unit 104, a device control unit 111, a conflicting device information acquisition unit 112, a device information acquisition unit 114, and a device control request reception unit 121. A storage unit includes sensor information 103, change value table 105, operational sensor change information 106, and device operation information 113. In the device control apparatus 100, the components of the control unit are illustrated in rectangular form, and the components of the storage unit in circular cylinder form. The conflicting device information acquisition unit 112 is one example of a specification unit. The device control unit 111 is one example of the control unit. The sensor information acquisition unit 102 is one example of a monitoring unit. The information change analysis unit 104 is one example of a determination unit. The conflicting device information acquisition unit 112 may have the function of a selection unit.

Provided on the outside of the device control apparatus 100 are a sensor 101, a device 110, and a service 120. The sensor 101 is connected to the sensor information acquisition unit 102. The sensor 101 is a thermometer, illuminometer, or the like, for example. The device 110 is connected to the device control unit 111 and the device information acquisition unit 114. The device 110 includes a controlled device 110a and a conflicting device 110b. The service 120 is connected to the device control request reception unit 121. The sensor information acquisition unit 102 acquires measurement value data transmitted from the sensor 101 and accumulates the acquired measurement value data in the sensor information 103.

### Components of the storage unit

The components of the storage unit will be described below. The storage unit is a semiconductor memory element such as a RAM (random access memory), ROM (read only memory), or flash memory, hard disc, or optical disc, for example.

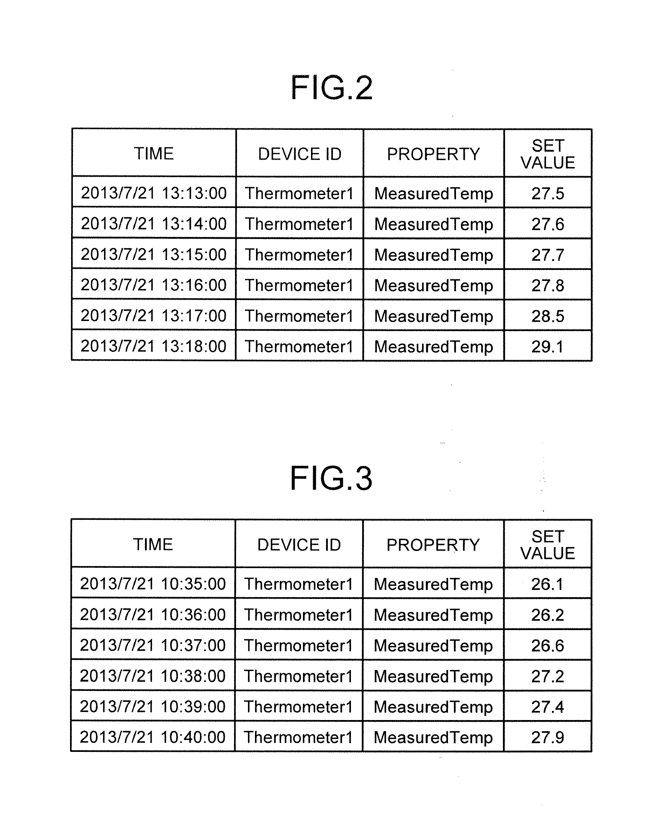

The sensor information 103 is history data obtained by collecting measurement data transmitted from the sensor 101 and storing the sensor measured values by time. A specific example will be provided. FIG. 2 is a diagram for describing the sensor information 103 obtained by measuring the room temperature using the thermometer while an air-conditioner is powered off. As illustrated in FIG. 2, the sensor information 103 associates the time at which the temperature was measured, device ID, property, and set value with one another. The sensor information 103 includes the time at which the sensor 101 measured the temperature as "Time", the identification number of the sensor 101 used for the measurement as "Device ID", and the value measured by the sensor 101 as "Set Value".

For example, in the sensor information 103, the time "2013/7/21 13:13:00" at which the temperature was measured by the thermometer is associated with the device ID of the thermometer "Thermometer1", the property indicative of the temperature measurement value "MeasuredTemp", and the set value indicative of the measured temperature "27.5". In addition, in the sensor information 103, the time "2013/7/21 13:14:00" is associated with the device ID "Thermometer1", the property "MeasuredTemp", and the set value "27.6". Further, in the sensor information 103, the time "2013/7/21 13:15:00" is associated with the device ID "thermometer1", the property "MeasuredTemp", and the set value "27.7". As for the subsequent history data, in the sensor information 103, the temperature measured each minute is stored in association with the time.

FIG. 3 is a diagram for describing the sensor information 103 obtained by measuring the room temperature using the thermometer in the case where an power window is opened. The data structure of the sensor information 103 is the same as that illustrated in FIG. 2. For example, in the sensor information 103, the time at which the temperature was measured by the thermometer "2013/7/21 10:35:00" is associated with the device ID of the thermometer "Thermometer1", the property indicative of a temperature measurement mode "MeasuredTemp", and the set value indicative of the temperature measured "26.1". In addition, in the sensor information 103, the time "2013/7/21 10:36:00" is associated with the device ID "Thermometer1", the property "MeasuredTemp", and the set value "26.2". Further, in the sensor information 103, the time "2013/7/21 10:37:00" is associated with the device ID "Thermometer1", the property "MeasuredTemp", and the set value "26.6". As for the subsequent history data, the sensor information 103 also includes the temperature measured each minute in association with the time.

The change value table 105 includes data indicative of a change value of sensor measured value as a criterion for determining the presence or absence of a change in change attribute. The change attribute indicates a change in a subject to be measured by the sensor 101. For example, in the case where the thermometer measures the room temperature, the change attribute takes room temperature rise, room temperature drop, or room temperature maintained. In this example, the change attribute takes room temperature rise when the room temperature exceeds a predetermined value, room temperature drop when the room temperature falls below a predetermined value, and room temperature maintained when the increase or decrease in the room temperature is smaller than a predetermined value.

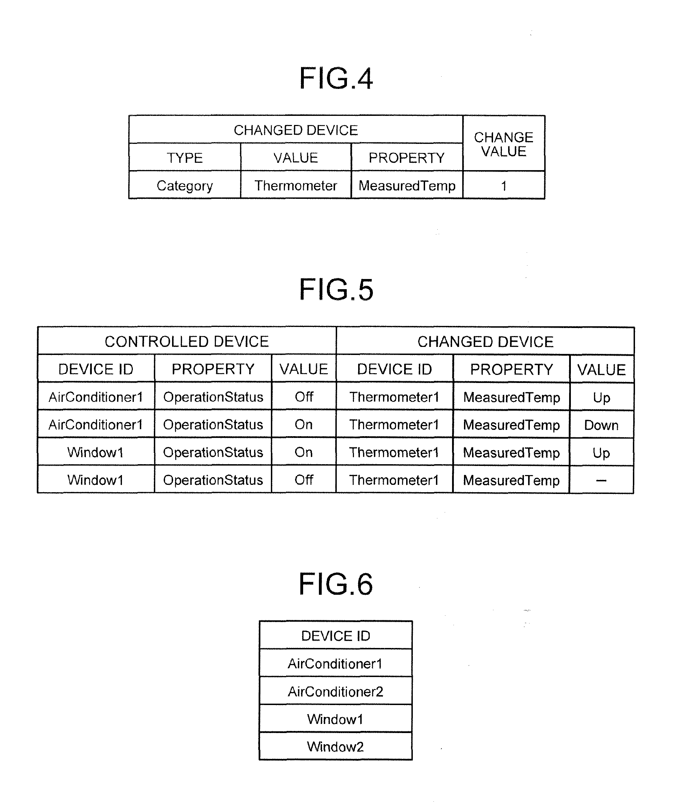

In the change value table 105, a changed device making measurements such as a thermometer or an illuminometer is associated with a change value of sensor measured value. The change value is used as a criterion for determining whether there is any change in change attribute. FIG. 4 is a diagram for describing the change value table 105 presenting the change value of sensor measured value as a criterion for determining whether there is any change in change attribute. As illustrated in FIG. 4, in the change value table 105, the type of changed device information, the value corresponding to the type, and the property are associated with one another. The change value as a criterion for determining whether there is any change in change attribute is also associated with the foregoing items in the change value table 105. The change value table 105 includes "Category" or "Device" as Type. When "Category" is entered as Type, the change value table 105 includes "Type of Device" as Value. When "Device" is entered as Type, the change value table 105 includes "Device ID" as Value. The change value table 105 also includes the property name of an event as a target of change determination as Property, and the change value of the sensor measured value as a criterion for determining the presence or absence of a change in change attribute as Change Value.

For example, in FIG. 4, the change value table 105 includes "Category" as Type, "Thermometer" as Value, "MeasuredTemp" as Property, and "1" as Change Value. In the case of FIG. 4, the change value table 105 is used to determine whether the change attribute has changed depending on whether the temperature has changed by one degree or more. Details of determination on the presence or absence of a change in change attribute will be described later.

The operational sensor change information 106 is data for specifying the conflicting device 110b conflicting with the change attribute of the controlled device. The operational sensor change information 106 associates the controlled device, the operation status of the controlled device, the changed device, and the change attribute with one another. The operational sensor change information 106 indicates whether the measured value raises, drops, or is maintained when the controlled device is in respective operation statuses.

FIG. 5 is a diagram for describing the operational sensor change information 106 indicative of the change attributes related to an air-conditioner and an power window. As illustrated in FIG. 5, the operational sensor change information 106 associates the device ID, property, and value of a controlled device with the device ID, property, and value of a changed device. The operational sensor change information 106 includes the identification number of the controlled device as "Device ID" of the controlled device, the property name of an event of the controlled device as "Property", and the operation status of the controlled device as "Value". Meanwhile, the operational sensor change information 106 includes the identification number of the changed device as "Device ID" of the changed device, the property name of a target event to be determined on change as "Property", and the change attribute as "Value".

For example, the operational sensor change information 106 illustrated in FIG. 5 includes on the first row "AirConditioner1" as Device ID of Controlled Device, "OperationStatus" as Property, and "Off" as Value. Meanwhile, the operational sensor change information 106 includes "Thermometer1" as Device ID of Changed Device, "MeasuredTemp" indicative of temperature change determination as Property, and "Up" indicative of room temperature rise as Value. Accordingly, the operational sensor change information 106 indicates that the room temperature rises when the air-conditioner is powered off.

The operational sensor change information 106 illustrated in FIG. 5 includes on the second row "AirConditioner1" as Device ID of Controlled Device, "OperationStatus" as Property, and "On" as Value. Meanwhile, the operational sensor change information 106 includes "Thermometer1" as Device ID of Changed Device, "MeasuredTemp" as Property, and "Down" as Value. Accordingly, the operational sensor change information 106 indicates that the room temperature drops when the air-conditioner is powered on.

The operational sensor change information 106 illustrated in FIG. 5 includes on the third row "Window1" as Device ID, "OperationStatus" as Property, and "On" as Value indicating that the window is opened. Meanwhile, the operational sensor change information 106 includes "Thermometer1" as Device ID of Changed Device, "MeasuredTemp" as Property, and "Up" as Value. Accordingly, the operational sensor change information 106 indicates that the room temperature rises when the power window is opened.

The operational sensor change information 106 illustrated in FIG. 5 includes on the fourth row "Window1" as Device ID of Controlled Device, "OperationStatus" as Property, and "Off" as Value. Meanwhile, the operational sensor change information 106 includes "Thermometer1" as Device ID of Changed Device, "MeasuredTemp" as Property, and "-" as Value. Accordingly, the operational sensor change information 106 indicates that the room temperature is maintained when the power window is closed.

FIG. 6 is a diagram for describing a device ID list of devices with change attributes to be acquired. The operational sensor change information 106 may hold only change attributes of devices included in the device ID list. This makes it possible to decrease the number of times when the sensor 101 performs the measurement process. For example, the device ID list of FIG. 6 includes "Airconditioner1", "Airconditioner2", "Window1", and "Window2" in this order from the first row, indicating that two air-conditioners and two power windows are set as targets for acquisition of change attributes.

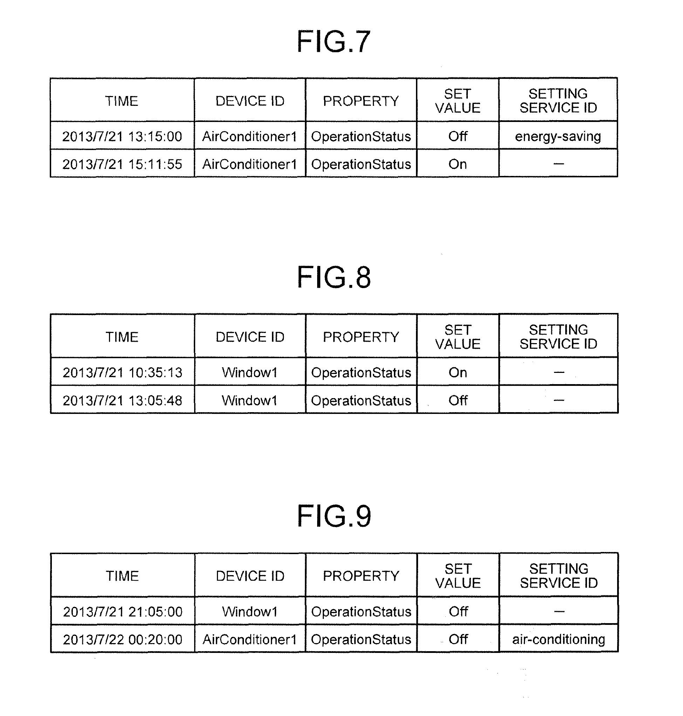

The device operation information 113 is history data indicative of operation status at each time. FIG. 7 is a diagram for describing the device operation information 113 indicative of the times when the operation status of the air-conditioner was changed. As illustrated in FIG. 7, the device operation information 113 associates time, device ID, property, set value, and set service ID with one another. The device operation information 113 includes the times when the operation status of the controlled device was changed as "Time", the identification number of the controlled device as "Device ID", the property names of events related to the controlled device as "Property", and the operation statuses of the controlled device as "Set Value". The device operation information 113 also includes the identification number of a service for controlling the controlled device as "Set Service ID".

The device operation information 113 includes on the first row "2013/7/21 13:15:00" as Time, "AirConditioner1"as Device ID, "OperationStatus" as Property, "Off" as Set value, and "energy-saving" as Set Service ID. Accordingly, the device operation information 113 indicates that the energy-saving service operated to power off the air-conditioner on July 21, 2013, at 13:15:00. The device operation information 113 also includes on the second row "2013/7/21 15:11:55" as Time, "AirConditioner1"as Device ID, "OperationStatus" as Property, "On" as Set Value, and "-" as Set Service ID. Accordingly, the device operation information 113 indicates that the user powered on the air-conditioner on July 21, 2013, at 15:11:55.

FIG. 8 is a diagram for describing the device operation information 113 indicative of the times when the operation status of the power window was changed. The device operation information 113 includes on the first row "2013/7/21 10:35:13" as Time, "Window1" as Device ID, "OperationStatus" as Property, "On" as Set Value, and "-" as Set Service ID. Accordingly, the device operation information 113 indicates that the user opened the power window on July 21, 2013, at 10:35:13. The device operation information 113 also includes on the second row that "2013/7/21 13:05:48" as Time, "Window1" as Device ID, "OperationStatus" as Property, "Off" as Set Value, and "-" as Set Service ID. Accordingly, the device operation information 113 indicates that the user closed the power window on July 21, 2013, at 13:05:48.

FIG. 9 is a diagram for describing the device operation information 113 indicative of operation statuses of the airconditioner and the power window. The device operation information 113 includes on the first row "2013/7/21 21:05:00" as Time, "Window1" as Device ID, "OperationStatus" as Property, "Off" as Set Value, and "-" as Set Service ID. Accordingly, the device operation information 113 indicates that the power window has been closed since July 21, 2013, at 21:05:00. The device operation information 113 also includes on the second row "2013/7/22 00:20:00" as Time, "AirConditioner1"as Device ID, "OperationStatus" as Property, "Off" as Set Value, and "air-conditioning" as Set Service ID. Accordingly, the device operation information 113 indicates that the air-conditioner has been powered off since July 22, 2013, at 00:20:00.

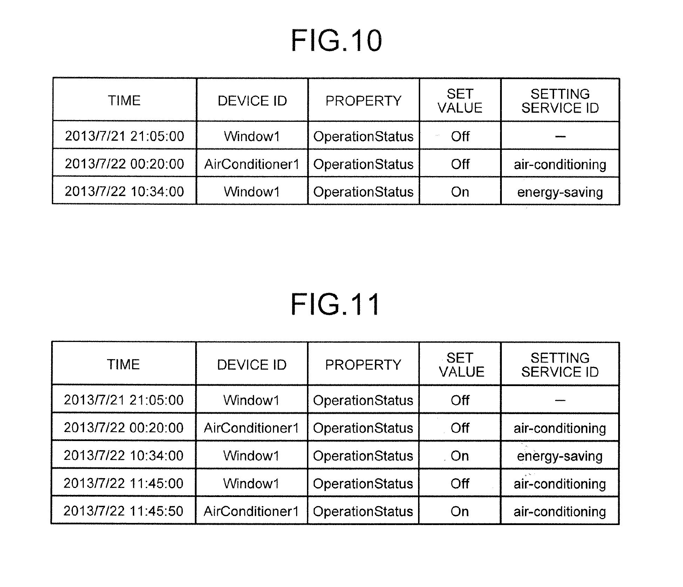

FIG. 10 is a diagram for describing the device operation information 113 indicative of the case where the air-conditioner was powered off and then the power window was opened. The first and second rows in FIG. 10 are the same as those in FIG. 9, and thus descriptions thereof will be omitted. The device operation information 113 includes on the third row "2013/7/22 10:34:00" as Time, "Window1" as Device ID, "OperationStatus" as Property, "On" as Set Value, and "energy-saving" as Set Service ID. Accordingly, the device operation information 113 indicates that the power window was switched from the open state to the closed state on July 22, 2013, at 10:34:00.

FIG. 11 is a diagram for describing the device operation information 113 indicative of the case where the power window was closed and then the air-conditioner was powered on. The first to third rows in FIG. 11 are the same as those in FIG. 10, and thus descriptions thereof will be omitted. The device operation information 113 includes on the fourth row "2013/7/22 11:45:00" as Time, "Window1" as Device ID, "OperationStatus" as Property, "Off" as Set Value, and "air-conditioning" as Set Service ID. The device operation information 113 also includes on the fifth row "2013/7/22 11:45:50" as Time, "AirConditioner1"as Device ID,
"OperationStatus" as Property, "On" as Set Value, and "air-conditioning" as Set Service ID. Accordingly, the device operation information 113 indicates that the window was closed on July 22, 2013, at 11:45:00, and then the air-conditioner was powered on July 22, 2013, at 11:45:50.

### Components of the control unit

The components of the control unit will be described below. The functions of the control unit can be realized by an integrated circuit such as an ASIC (application specific integrated circuit) or FPGA (field programmable gate array), for example. The functions of the control unit can also be realized by a CPU (central processing unit) executing predetermined programs, for example.

The sensor information acquisition unit 102 acquires sensor measured values at each time from the sensor information 103. The sensor information acquisition unit 102 accumulates the acquired sensor measured values in the sensor information 103. For example, referring to FIG. 2, when starting acquisition of sensor measured values on July 21, 2013, at 13:13:00, the sensor information acquisition unit 102 acquires the set value "27.5" on the first row and sets the same as a saved value. After that, the sensor information acquisition unit 102 continues to acquire sensor measured values for a specific period of time. When acquired a sensor measured value on July 21, 2013, at 13:18:00, the sensor information acquisition unit 102 further acquires the set value "29.1" on the sixth row in FIG. 2 and sets the same as a latest received value.

Meanwhile, referring to FIG. 3, when starting acquisition of sensor measured values on July 21, 2013, at 10:35:00, the sensor information acquisition unit 102 acquires the set value "26.1" on the first row and sets the same as a saved value. After that, the sensor information acquisition unit 102 continues to acquire sensor measured values for a specific period of time. When acquired a sensor measured value on July 21, 2013, at 10:40:00, the sensor information acquisition unit 102 further acquires the set value "27.9" on the sixth row in FIG. 3 and sets the same as a latest received value.

The information change analysis unit 104 compares the amount of a change between a sensor value at a point of time when the device information acquisition unit 114 received the operation information of the device and a sensor value at the time when a specific period of time has elapsed, to the change value stored in the change value table 105, thereby to determine the presence or absence of a change in the change attribute. Specifically, first, the device information acquisition unit 114 detects a change in the operation status of the device, and notifies the change in the operation status of the device to the information change analysis unit 104. Then, the information change analysis unit 104 receives from the sensor information acquisition unit 102 the sensor measured value immediately after the change of the operation status of the device. The sensor measured value is equivalent to the saved value. Further, the information change analysis unit 104 receives the sensor measured value from the sensor information acquisition unit 102 at each change in the sensor measured value. The sensor measured value is equivalent to the latest received value.

In parallel to the acquisition of sensor measured values, the information change analysis unit 104 acquires the change value of sensor measured value as a criterion for determining the presence or absence of a change in the change attribute in the change value table 105. For the purpose, first, the information change analysis unit 104 searches the change value table 105 in FIG. 4 for a row corresponding to the sensor. Then, the information change analysis unit 104 acquires from the searched corresponding row the change value of the sensor measured value as a criterion for determining the presence or absence of a change in the change attribute.

Then, the information change analysis unit 104 calculates a difference between the saved value and the latest received value acquired by the sensor information acquisition unit 102, to acquire the amount of change in the sensor measured value. When the amount of change in the sensor measured value is larger than the change value, the information change analysis unit 104 determines that the change attribute has increased or decreased. Meanwhile, when the amount of change in the sensor measured value after lapse of a specific period of time is smaller than the change value of the sensor measured value, the information change analysis unit 104 determines that the change attribute has not changed. Then, the information change analysis unit 104 updates the change attribute of the controlled device 110a in the operational sensor change information 106, based on the determination result.

For example, first, the information change analysis unit 104 receives the sensor measured value "27.5" acquired by the sensor information acquisition unit 102 and the measurement time "2013/7/21 13:13:00" when the air-conditioner was powered off. At that time, the information change analysis unit 104 saves the sensor measured value "27.5". After that, the information change analysis unit 104 continues to receive sensor measured values. In parallel to the receipt of sensor measured values, the information change analysis unit 104 acquires the change value at temperature measurement by the thermometer. When acquiring the change value at temperature measurement by the thermometer from the change value table 105 in FIG. 4, since "Category" is stored as Type and "Thermometer" as Value on the first row, the information change analysis unit 104 determines the first row as a row corresponding to the thermometer. Further, since "MeasuredTemp" is stored as Property and "1" as Change Value on the same row, the information change analysis unit 104 acquires the change value "1" at temperature measurement by the thermometer.

Then, the information change analysis unit 104 receives minutely the sensor measured value, and receives the latest sensor measured value "29.1" at the measurement time "2013/7/21 13:18:00". At that time, since the value of a difference between the sensor measured value "27.5" at the measurement time "2013/7/21 13:13:00" and the latest sensor measured value "29.1" is larger than the change value "1", the information change analysis unit 104 determines the change attribute as "Up" at power-off of the airconditioner. Then, as illustrated in FIG. 5, the information change analysis unit 104 updates the "Value" of the changed device on the first row corresponding to the power-off of the airconditioner to "Up".

The information change analysis unit 104 also receives the sensor measured value "26.1" at opening of the power window acquired by the sensor information acquisition unit 102, and the measurement time "2013/7/21 10:35:00". After that, the information change analysis unit 104 continues to receive sensor measured values. In parallel to the receipt of sensor measured values, the information change analysis unit 104 acquires the change value at temperature measurement by the thermometer. When acquiring the change value at temperature measurement by the thermometer from the change value table 105 in FIG. 4, since "Category" is stored as Type and "Thermometer" as Value on the first row, the information change analysis unit 104 determines the first row as a row corresponding to the thermometer. Then, since "MeasuredTemp" is stored as Property and "1" as Change Value on the same row, the information change analysis unit 104 acquires the change value "1" at temperature measurement by the thermometer.

Then, the information change analysis unit 104 receives minutely the sensor measured value, and receives the latest sensor measured value "27.2" at the measurement time "2013/7/21 10:38:00". At that time, since the value of a difference between the sensor measured value "26.1" at the measurement time "2013/7/21 10:35:00" and the latest sensor measured value "27.2" is larger than the change value "1", the information change analysis unit 104 determines the change attribute as "Up" at power-off of the airconditioner. Then, as illustrated in FIG. 5, the information change analysis unit 104 updates the "Value" of the changed device on the third row corresponding to the opening of the power window to "Up".

The device control request reception unit 121 accepts a request for control of the controlled device 110a from the service 120. The service 120 is "energy-saving service", "air-conditioning service", or the like, for example. The "energy-saving service" is used to automatically control household facilities such as an airconditioner and an power window in the user's house according to information on the user's surrounding environments and the like, to realize reduction in power consumption. Meanwhile, the "air-conditioning service" is used to automatically control the household facilities such as an air-conditioner and an power window in the house, according to information on the user's surrounding environments and the like, to adjust the room temperature appropriately. The service 120 may be transmitted from a home gateway installed in the house or may be transmitted from a server over the Internet.

In response to the request accepted by the device control request reception unit 121, the device control unit 111 controls the controlled device 110a corresponding to the request. For the purpose, the device control unit 111 receives the device ID of the controlled device 110a as a target of the request and the contents of the request. Then, when no notification of the presence of the conflicting device 110b is received from the conflicting device information acquisition unit 112 described later, the device control unit 111 controls the controlled device 110a according to the contents of the received request.

For example, the device operation information 113 in FIG. 9 indicates on the first row that the user used the device control unit 111 to close the power window on July 21, 2013, at 21:05:00. The device operation information 113 also indicates on the second row that the device control unit 111 powered off the airconditioner on July 22, 2013, at 00:20:00, in accordance to the request from the air-conditioning service.

The conflicting device information acquisition unit 112 specifies the conflicting device 110b conflicting with the controlled device 110a, based on the operational sensor change information 106. For the purpose, the conflicting device information acquisition unit 112 receives the device ID of the controlled device 110a as a target of the request and the contents of the request. Then, the conflicting device information acquisition unit 112 specifies the conflicting device 110b conflicting with the controlled device 110a, based on the operational sensor change information 106.

Specifically, when the device control request reception unit 121 accepts a request for powering on the air-conditioner, the conflicting device information acquisition unit 112 performs the following process referring to FIG. 5. First, the conflicting device information acquisition unit 112 ascertains that "AirConditioner1"is stored as Device ID of Controlled Device 110a and "OperationStatus" as Property, and "On" as Value on the second row of the operational sensor change information 106 in FIG. 5. Then, the conflicting device information acquisition unit 112 acquires "Down" stored as Value of Changed Device.

Then, the conflicting device information acquisition unit 112 searches the operational sensor change information 106 for the conflicting device 110b conflicting with "Down" as the change attribute of the air-conditioner. For example, the conflicting device information acquisition unit 112 ascertains the change attribute of the power window in the operational sensor change information 106 of FIG. 5. In this case, the conflicting device information acquisition unit 112 ascertains that "Window1" is stored as Device ID of the controlled device 110a, "OperationStatus" as Property, and "On" as Value on the third row of the operational sensor change information 106 in FIG. 5. Further, the conflicting device information acquisition unit 112 acquires "Up" stored as "Value" of Changed Device. At that time, since the acquired change attribute "Up" of the power window conflicts with the change attribute "Down" of the air-conditioner, the conflicting device information acquisition unit 112 determines the conflicting device of the air-conditioner as "Window1".

Then, the conflicting information device acquisition unit 112 ascertains from the device operation information 113 that the power window specified as conflicting device is in open state. Then, the conflicting device information acquisition unit 112 refers to the operational sensor change information 106. Then, the conflicting device information unit 112 ascertains that the change attribute "Up" in the open state of the power window conflicts with the change attribute "Down" of the air-conditioner.

Then, the conflicting device information acquisition unit 112 searches the operational sensor change information 106 for the operation status of the power window not conflicting with the air-conditioner. Specifically, the conflicting device information acquisition unit 112 searches the operational sensor change information 106 for the operation status of the power window with the device ID "Window1" and the change attribute "-" or "down". Then, the conflicting device information acquisition unit 112 ascertains that the operation status of the changed device with the device ID "Window1" and the value "-" has "OperationStatus" as Property and "Off" as Value. The conflicting device information acquisition unit 112 then transmits to the device control unit 111 a control command for closing the power window, based on the ascertained operation status of the device with the device ID "Window1".

Then, the device control unit 111 closes the power window. At that time, the device information acquisition unit 114 adds the record of closing the window on July 22, 2013 at 11:45:00 to the fourth row of the device operation information 113 in FIG. 11. The conflicting device information acquisition unit 112 then refers to the device operation information 113 and transmits to the device control unit 111 a notification that the competition between the air-conditioner and the power window has been eliminated. The device control unit 111 then executes the request for powering on the air-conditioner. At that time, the device information acquisition unit 114 adds the record of powering on the airconditioner on July 22, 2013, at 11:45:50 on the fifth row of the device operation information 113 in FIG. 11.

### Process flow of creating the operational sensor change information

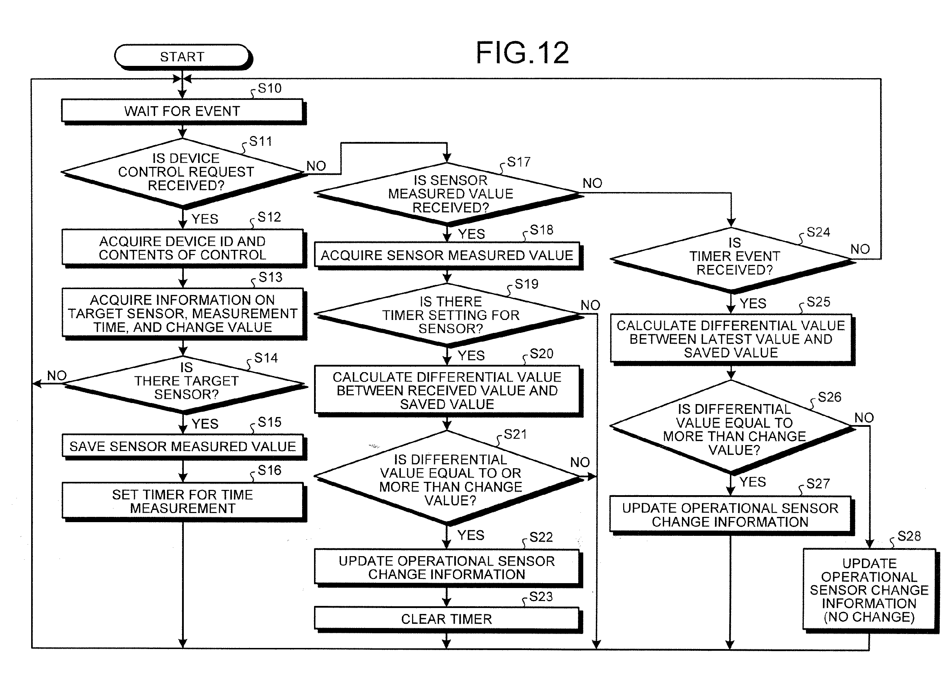

Next, a flow of a process for creating the operational sensor change information will be described. FIG. 12 is a flow diagram for describing a flow of a process for creating the operational sensor change information 106. In the case of FIG. 12, the sensor information acquisition unit 102 acquires sensor measured values in real time. The sensor information acquisition unit 102 may receive directly sensor measured values from the sensor 101.

As illustrated in FIG. 12, first, the sensor information acquisition unit 102 enters a state waiting for an event (step S10). Then, when receiving a request for control of the controlled device 110a such as an air-conditioner (step S11: Yes), the sensor information acquisition unit 102 acquires the device ID of the controlled device 110a and the contents of the control (step S12). Then, the sensor information acquisition unit 102 acquires information on a target sensor to be used for measurement (step S13). The information change analysis unit 104 also acquires the sensor measurement time and the change value as a criterion for determining whether there is a change in the change attribute (step S13). When no target sensor exists (step S14: No), the sensor information acquisition unit 102 cancels the acquisition of sensor measured values and returns to the state waiting for an event (step S10). Meanwhile, when the target sensor 101 exists (step S14: Yes), the sensor information acquisition unit 102 saves in the sensor information 103 the sensor measured value at starting of the device control received from the sensor 101 (step S15). The sensor information acquisition unit 102 then sets the sensor measurement time in a timer (step S16). Then, the sensor information acquisition unit 102 returns to the state waiting for an event (step S10).

Next, when receiving the sensor measured value from the sensor 101 (step S11: No, step S17: Yes), the sensor information acquisition unit 102 acquires the device ID and the measured value from the sensor 101 (step S18). The sensor information acquisition unit 102 then determines whether the sensor measurement time is set in the timer (step S19). When the timer is not set (step S19: No), the sensor information acquisition unit 102 returns to the state waiting for an event (step S10). Meanwhile, when the timer is set (step S19: Yes), the sensor information acquisition unit 102 transmits to the information change analysis unit 104 the saved value of the sensor measured value in the sensor information 103 and the latest received value of the sensor measured value from the sensor 101. The information change analysis unit 104 calculates the value of a difference between the latest received value and the saved value (step S20). When the difference value does not exceed the change value (step S21: No), the information change analysis unit 104 returns to the state waiting for an event (step S10). Meanwhile, when the difference value exceeds the change value (step S21: Yes), the information change analysis unit 104 updates the operational sensor change information 106 to indicate that there is a change in the change attribute of the controlled device 110a (step S22). Then, the sensor information acquisition unit 102 clears the set timer (step S23).

Meanwhile, when the time set in the timer is exceeded, the sensor information acquisition unit 102 receives a timer event (step S11: No, step S17: No, step S24: Yes). In this case, the sensor information acquisition unit 102 transmits the latest value as the latest sensor measured value from the sensor 101 to the information change analysis unit 104. The information change analysis unit 104 calculates the value of a difference between the latest value of the sensor measured value and the saved value of the sensor measured value with a change in the operation status of the device (step S25). When the difference value exceeds the change value (step S26: Yes), the information change analysis unit 104 updates the operational sensor change information 106 to indicate that there is a change in the change attribute of the controlled device 110a (step S27). For example, in case the sensor 101 is a thermometer, the information change analysis unit 104 stores "Up" indicative of a temperature rise or "down" indicative of a temperature drop as the change attribute of the controlled device 110a in the operational sensor change information 106. Meanwhile, when the difference value does not exceed the change value (step S26: No), the information change analysis unit 104 updates the operational sensor change information 106 to indicate that there is no change in the change attribute of the controlled device 110a (step S28). For example, the information change analysis unit 104 stores "-" indicative of the absence of a temperature change as the change attribute of the controlled device 110a in the operational sensor change information 106. At step S24, when the received event is not device control (step S11: No, step S17: No, step S24: No), the device control request reception unit 121 returns to the state waiting for an event (step S10).

### Process flow of controlling a controlled device with a conflicting device

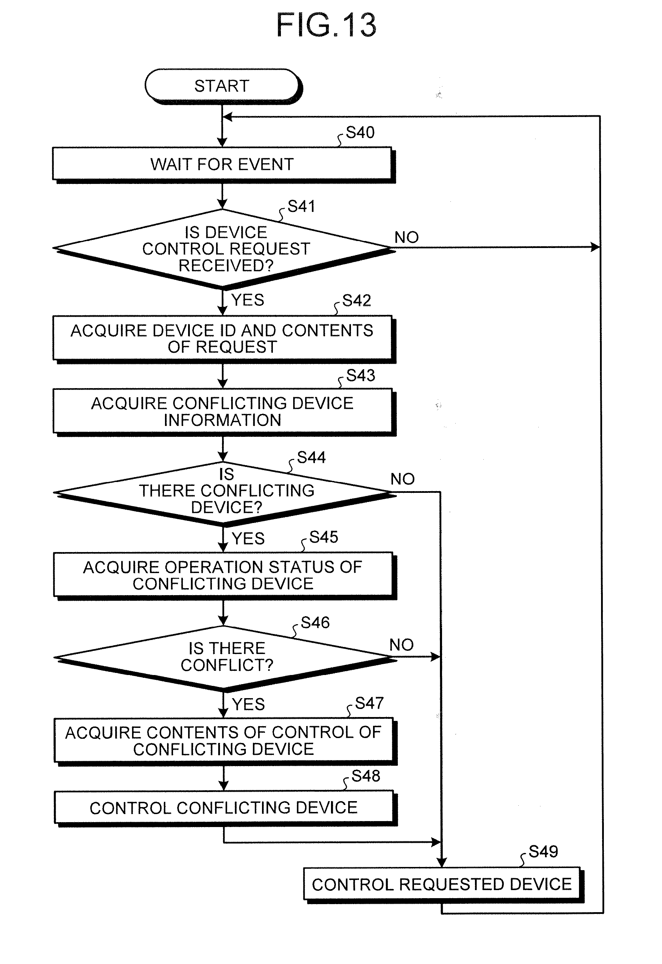

Next, a flow of a process for controlling a controlled device having a conflicting device by the device control apparatus 100 will be described. FIG. 13 is a flow diagram for describing a flow of a process for controlling a controlled device having a conflicting device.

As illustrated in FIG. 13, first, the device control request reception unit 121 enters a state waiting for an event (step S40). Then, when the received event is not device control (step S41: No), the device control request reception unit 121 returns to the state waiting for an event (step S40). Meanwhile, when receiving a request for device control from the service 120 (step S41: Yes), the device control request reception unit 121 acquires the device ID of the controlled device 110a as a target of the request and the contents of the request (step S42). Then, the device control request reception unit 121 notifies the device ID of the controlled device 110a and the contents of the request to the conflicting device information acquisition unit 112. The conflicting device information acquisition unit 112 then acquires the conflicting device 110b from the operational sensor change information 106 (step S43). When the conflicting device information acquisition unit 112 determines that the conflicting device 110b does not exist in the operational sensor change information 106 (step S44: No), the device control unit 111 controls the controlled device 110a according to the contents of the request (step S49).

Meanwhile, when determining that the conflicting device 110b exists (step S44: Yes), the conflicting device information acquisition unit 112 acquires the operation status of the conflicting device 110b from the device operation information 113 (step S45). Then, the conflicting device information acquisition unit 112 compares the change attribute of the controlled device 110a with the change attribute of the conflicting device 110b acquired from the operational sensor change information 106. The conflicting device information acquisition unit 112 determines from the comparison result whether the conflicting device 110b conflicts with the controlled device 110a (step S46). When determining that the conflicting device 110b does not conflict with the controlled device 110a (step S46: No), the conflicting device information acquisition unit 112 controls the controlled device 110a according to the contents of the request (step S49). Meanwhile, when determining that the conflicting device 110b conflicts with the controlled device 110a (step S46: Yes), the conflicting device information acquisition unit 112 acquires the contents of the control of the conflicting device 110b for eliminating the competition, based on the operational sensor change information 106 (step S47). The device control unit 111 then controls the conflicting device 110b according to the acquired contents of the control (step S48). Then, the device control unit 111 controls the controlled device 110a according to the contents of the request (step S49).

As described above, when accepting the request for control of the controlled device 110a, the device control apparatus 100 specifies the conflicting device 110b based on the operational sensor change information 106, controls the conflicting device 110b, and then executes the request for the controlled device 110a. This produces the advantage of appropriately controlling the conflicting device.

### [b] Second Embodiment

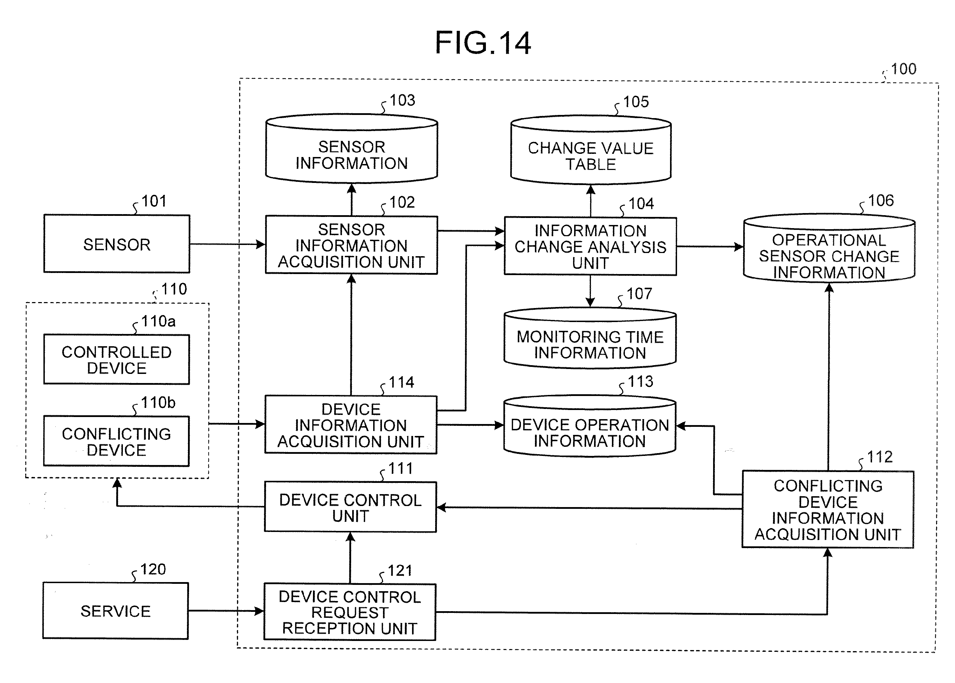

The time that elapses before a change in change attribute may vary depending on the size of a room in which a controlled device is installed or the performance of the controlled device. For example, the time during which the temperature of the room changes may vary depending on the size of a room in which an airconditioner is installed or the performance of the air-conditioner. Accordingly, the information change analysis unit 104 may acquire sensor measured values within a monitoring time set for each controlled device 110a to determine the presence or absence of a change in the change attribute of the controlled device 110a. FIG. 14 is a functional block diagram illustrating a configuration of a device control apparatus according to a second embodiment. The configuration of the device control apparatus illustrated in FIG. 14 is different from that illustrated in FIG. 1 in that the storage unit has monitoring time information 107. In this case, the information change analysis unit 104 compares the amount of a change in sensor measured value upon lapse of a monitoring time acquired by the sensor information acquisition unit 102 with the change value stored in the change value table 105, thereby to determine the presence or absence of a change in the change attribute.

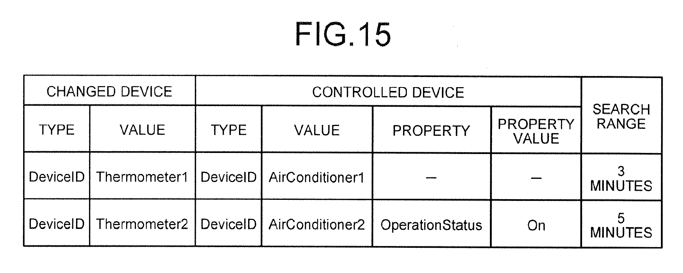

FIG. 15 is a diagram illustrating one example of a data structure of the monitoring time information 107. As illustrated in FIG. 15, the monitoring time information 107 associates the type of the changed device and the value corresponding to the type with each other, and also associates the type of the controlled device, the value corresponding to the type, the property, the property value, and the search range with one another.

For example, the monitoring time information 107 includes on the first row "DeviceID" as Type of Controlled Device, "AirConditioner1"as Value, "-" as Property, "-" as Property Value, and "three minutes" as Search Range. That is, the foregoing information indicates that the monitoring time is three minutes when a first air-conditioner is powered on or off. The monitoring time information 107 includes on the second row "DeviceID" as Type of Controlled Device, "AirConditioner2" as Value, "OperationStatus" as Property, "On" as Property Value, "five minutes" as Search Range. That is, the foregoing information indicates that the monitoring time is five minutes when a second air-conditioner is powered on.

As described above, in the monitoring time information 107, it is possible to, for each controlled device, set the monitoring time adapted to the performance of the controlled device, the size of a room in which the controlled device is installed, and the like. This makes it possible to set the appropriate change attribute of each controlled device in the operational sensor change information 106.

### [c] Third Embodiment

As described above, the conflicting device 110b is specified based on the operational sensor change information 106, but in some cases, it is preferred that the conflicting device 110b is not controlled when the controlled device 110a and the conflicting device 110b are installed in different places or are of different types. For example, if the conflicting device 110b of an airconditioner is an power window, when the air-conditioner and the power window are installed in different rooms, the power window does not interfere with heating or cooling operations of the airconditioner. In addition, if the conflicting device 110b of the air-conditioner is specified as an IH cooking heater, the device control unit 111 may stop operations of the IH cooking heater when the air-conditioner starts cooling operations.

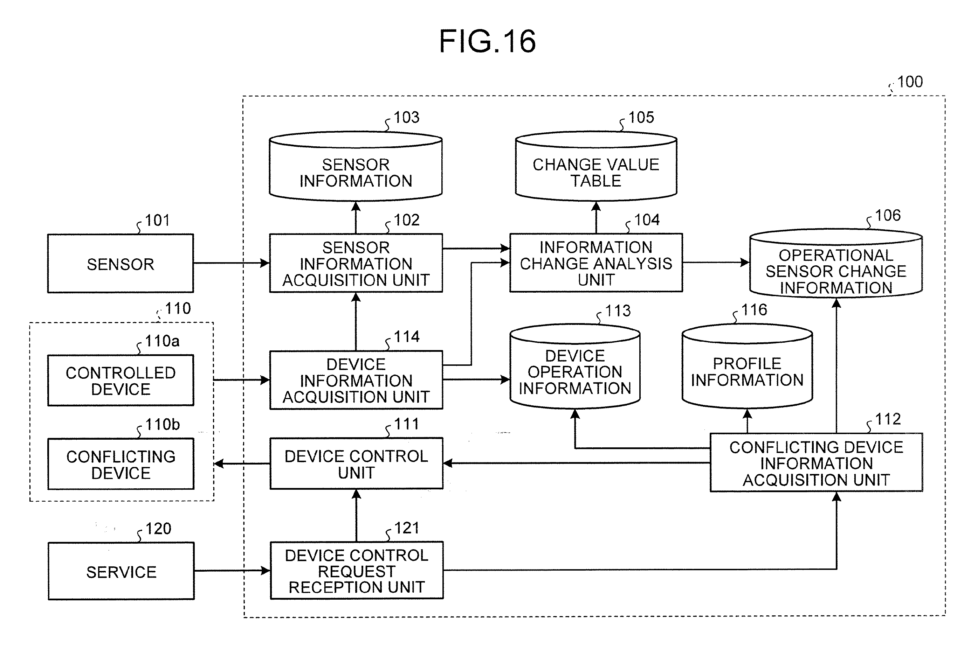

Accordingly, the conflicting device information acquisition unit 112 may acquire information on the installation place and device type of each controlled device from profile information 116 and use the same for specification of the conflicting device. FIG. 16 is a functional block diagram illustrating a configuration of a device control apparatus according to a third embodiment. The configuration of the device control apparatus illustrated in FIG. 16 is different from that illustrated in FIG. 1 in that the storage unit has the profile information 116. In this case, the conflicting device information acquisition unit 112 determines whether the profile information 116 conflicts with the change attribute of the controlled device 110a from the operational sensor change information 106, and also determines whether there is a match in the installation place and the device type from the profile information 116. Then, the conflicting device information acquisition unit 112 specifies the conflicting device 110b that conflicts with the controlled device 110a in change attribute and matches with the controlled device 110a in installation place and device type.

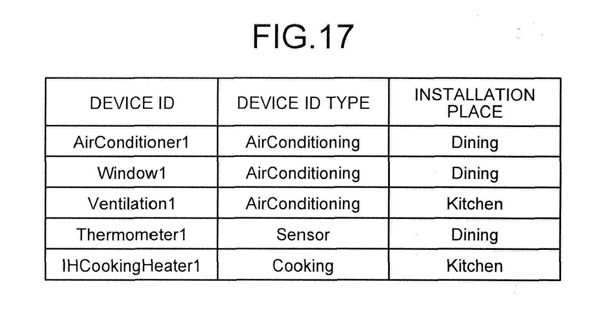

FIG. 17 is a diagram illustrating one example of a data structure of the profile information 116. As illustrated in FIG. 17, the profile information 116 associates device ID, device type, and installation place with one another. The "Device ID Type" indicates the device type of the controlled device 110a such as "air-conditioner", "sensor", "cooking device", or the like. The "installation place" indicates the installation place of the controlled device 110a such as "dining room", "kitchen", "living room", or the like. For example, "AirConditioner1" and "Window1" may conflict with each other because there is a match between the two in device ID type and installation place. In addition, "AirConditioner1"and "Ventilation1" do not conflict with each other because there is no match between the two in installation place. Further, "Ventilation1" and "IHCookingHeater1" do not conflicts with each other because there is no match between the two in device ID type. As described above, since the conflicting device information acquisition unit 112 refers to the profile information 116, it is possible to prevent that devices installed in different rooms or different in purpose of use are wrongly specified as conflicting devices.

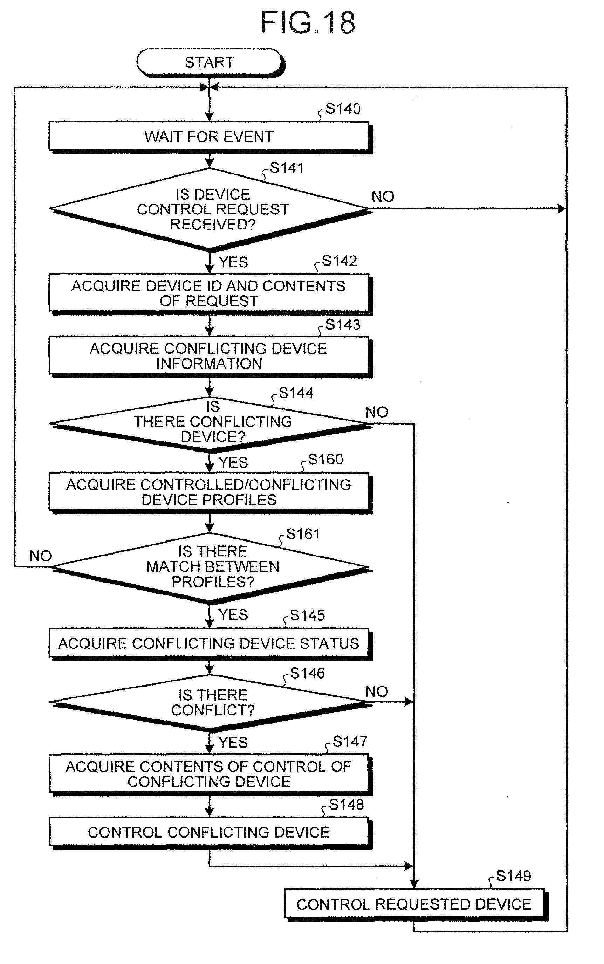

FIG. 18 is a flow diagram for describing a flow of a process for control of a controlled device in the case where the storage unit has profile information. The same steps as those illustrated in FIG. 13 are given the same last two digits of numbers as those illustrated in FIG. 13. Descriptions of the same steps as those illustrated in FIG. 13 will be omitted. As illustrated in FIG. 18, the device control request reception unit 121 enters a state waiting for an event (step S140). Then, when receiving a request for device control from the service 120 (step S141: Yes), the device control request reception unit 121 acquires the device ID of the controlled device 110a as a target of the request and the contents of the request related to the controlled device 110a (step S142). Then, the conflicting device information acquisition unit 112 acquires information on the conflicting device 110b from the operational sensor change information 106 (step S143).

Then, when determining that the conflicting device 110b exists (step S144: Yes), the conflicting device information acquisition unit 112 acquires profiles of the controlled device 110a and the conflicting device 110b from the profile information 116 (step S160). The conflicting device information acquisition unit 112 then determines whether there is a match in profile between the controlled device 110a and the conflicting device 110b (step S161). When there is no match in profile (step S161: No), the conflicting device information acquisition unit 112 returns to the state waiting for an event (step S140). Meanwhile, when there is a match in profile (step S161: Yes), the conflicting device information acquisition unit 112 acquires the operation status of the conflicting device 110b (step S145).

Then, when determining that the conflicting device 110b conflicts with the controlled device 110a (step S146: Yes), the conflicting device information acquisition unit 112 acquires the contents of the control of the conflicting device 110b (step S147). Then, the device control unit 111 controls the conflicting device 110b according to the acquired contents of the control (step S148). The device control unit 111 then controls the controlled device 110a according to the contents of the request (step S149).

### [d] Fourth Embodiment

After the device control request reception unit 121 accepts an urgent request from the service 120 and the device control unit 111 controls the conflicting device 110b in response to the request, the device control request reception unit 121 may accept a normal request from another service. For example, after accepting, on occurrence of a fire, a request for opening an power window to remove smoke from a security service, the device control request reception unit 121 may accept a request for closing an power window from an energy-saving service.

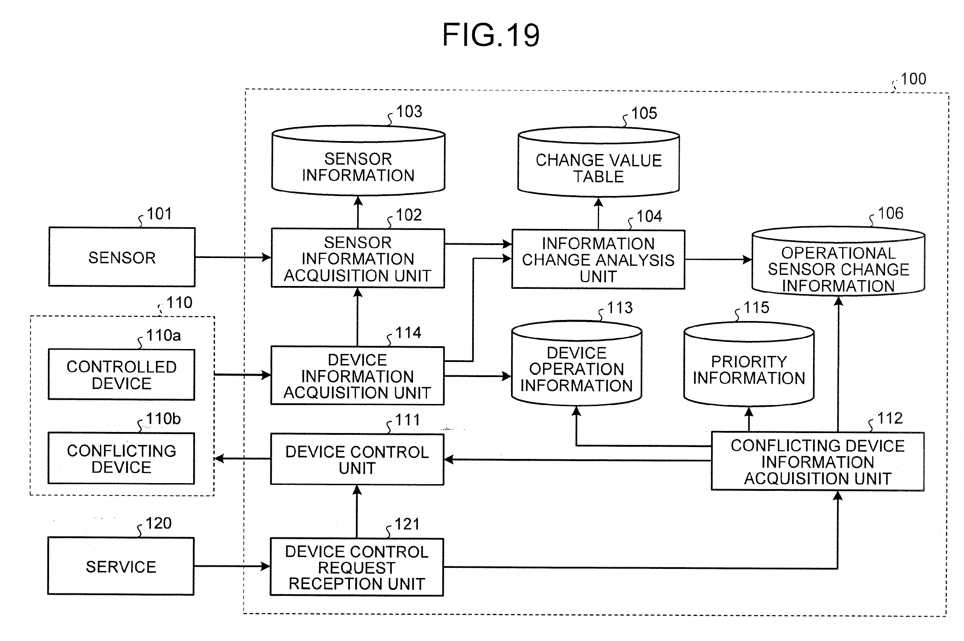

Thus, when receiving a request from a lower-priority service after the device control unit 111 executes a higher-priority service, the conflicting device information acquisition unit 112 does not need to cause the device control unit 111 to execute the request from the lower-priority service. FIG. 19 is a functional block diagram illustrating a configuration of a device control apparatus according to a fourth embodiment. The configuration of the device control apparatus illustrated in FIG. 19 is different from that illustrated in FIG. 1 in that the storage unit has priority order information 115. In this case, the conflicting device information acquisition unit 112 acquires the priority of the lastly requested service 120 and the priority of the newly requested service 120 from the priority order information 115. When the priority of the lastly requested service 120 is higher, the conflicting device information acquisition unit 112 does not execute the newly requested service 120. Meanwhile, when the priority of the lastly requested service 120 is lower or on the same level, the conflicting device information acquisition unit 112 executes the newly requested service 120.

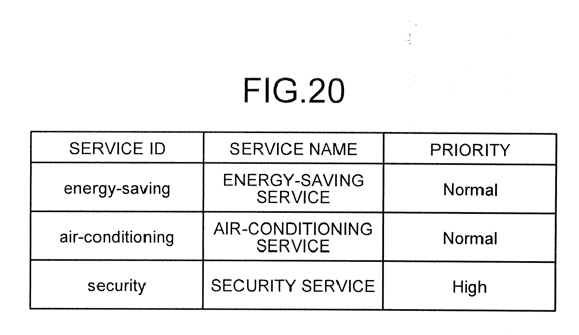

FIG. 20 is a diagram illustrating one example of a data structure of the priority order information 115. As illustrated in FIG. 20, the priority order information 115 associates service ID, service name, and priority with one another. The service name indicates the name of the service 120 such as "energy-saving service", "air-conditioning service", "security service", or the like. The priority indicates the priority level of the service 120 such as "High", "Normal", "Low", or the like. For example, since the "security service" is higher in priority than the "energy-saving service", when lastly receiving a request from the "security service", the conflicting device information acquisition unit 112 does not execute any request received after that from the "energy-saving service".

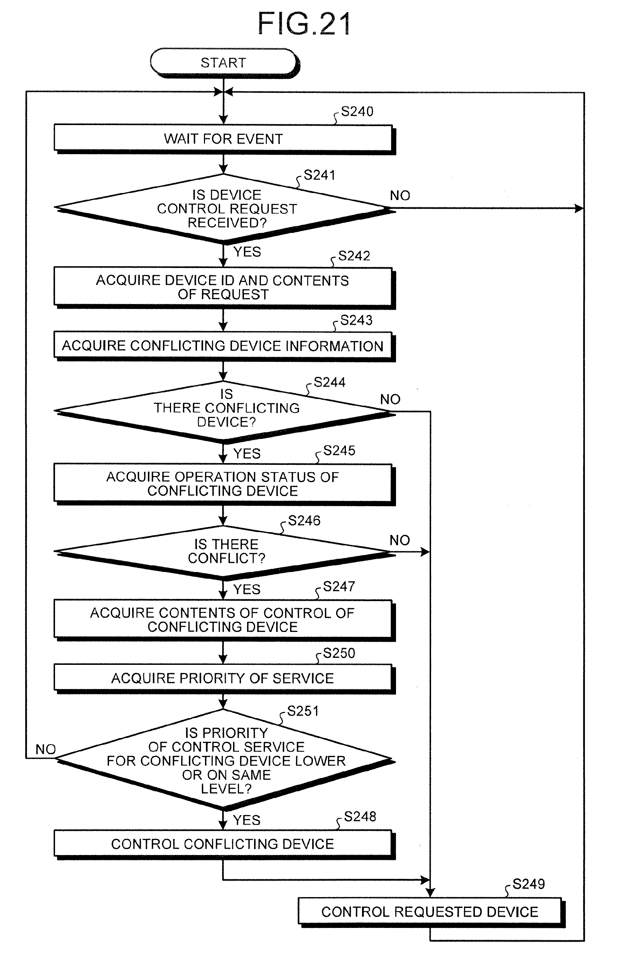

FIG. 21 is a flow diagram for describing a flow of a process for controlling a controlled device in the case where the storage unit has priority order information. The same steps as those illustrated in FIG. 13 are given the same last two digits of numbers as those illustrated in FIG. 13. Descriptions of the same steps as those illustrated in FIG. 13 will be omitted. As illustrated in FIG. 21, the device control request reception unit 121 enters a state waiting for an event (step S240). Then, when receiving a request for device control from the service 120 (step S241: Yes), the device control request reception unit 121 acquires the device ID of the controlled device 110a as a target of the request and the contents of the request (step S242). Then, the conflicting device information acquisition unit 112 acquires information on the conflicting device 110b from the operational sensor change information 106 (step S243).

When determining that the conflicting device 110b exists (step S244: Yes), the conflicting device information acquisition unit 112 acquires the operation status of the conflicting device 110b (step S245). Then, when determining that the conflicting device 110b conflicts with the controlled device 110a (step S246: Yes), the conflicting device information acquisition unit 112 acquires the contents of the control of the conflicting device 110b (step S247). The conflicting device information acquisition unit 112 then acquires the priority of the lastly requested service 120 and the priority of the newly requested service 120 from the priority order information 115 (step S250). When the priority of the lastly requested service 120 is higher (step S251: No), the conflicting device information acquisition unit 112 returns to the state waiting for an event (step S240). Meanwhile, when the priority of the lastly requested service 120 is lower or on the same level (step S251: Yes), the conflicting device information acquisition unit 112 causes the device control unit 111 to control the conflicting device (step S248). Then, the device control unit 111 controls the controlled device 110a according to the contents of the request (step S249).

### [e] Fifth Embodiment

The change attribute of the controlled device may vary depending on the season or the time zone. For example, when an air-conditioner is started in the automatic operation mode in the summer season, the air-conditioner performs cooling operations to lower the room temperature, whereas when the air-conditioner is started in the automatic operation mode in the winter season, the air-conditioner performs heating operations to raise the room temperature. In addition, when an power window is opened in the summer season, the warm air enters into the room to raise the room temperature, whereas when the power window is opened in the winter season, cool air enters into the room to lower the room temperature. In such a manner as described above, the controlled device 110a may exhibit different change attributes in different seasons or time zones even if the controlled device is controlled in the same fashion.

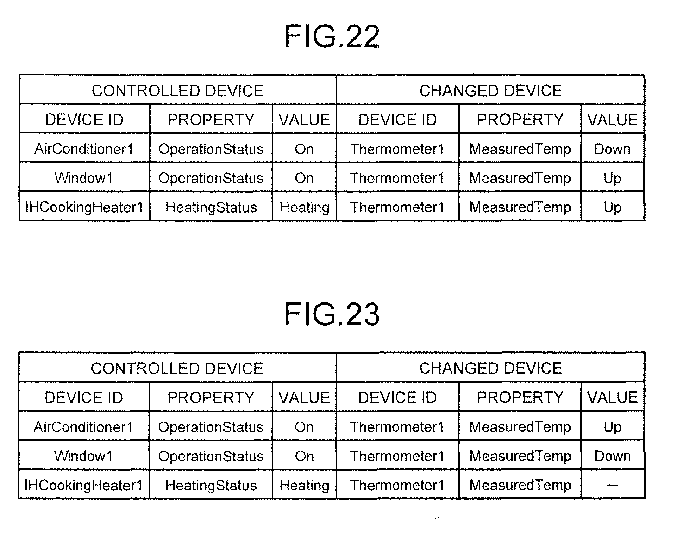

Thus, the storage unit may hold a plurality of operational sensor change information 106 to corresponding to the seasons or time zones. FIG. 22 is a diagram illustrating one example of operational sensor change information corresponding to the summer season or the afternoon. FIG. 23 is a diagram illustrating one example of operational sensor change information corresponding to the winter season. The data structures of the operational sensor change information 106 illustrated in FIGS. 22 and 23 are the same as that illustrated in FIG. 5.

For example, as illustrated in FIG. 22, the operational sensor change information 106 stores on the first row "AirConditioner1"as Device ID of Controlled Device, "OperationStatus" as Property, and "On" as Value. The operational sensor change information 106 also stores "Thermometer1" as Device ID of Changed Device, "MeasuredTemp" as Property, and "Down" as Value. Meanwhile, as illustrated in FIG. 23, the operational sensor change information 106 stores on the first row "AirConditioner1"as Device ID of Controlled Device, "OperationStatus" as Property, and "On" as Value. The operational sensor change information 106 also stores "Thermometer1" as Device ID of Changed Device, "MeasuredTemp" as Property, and "Up" as Value. The foregoing information indicates that, when the air-conditioner is powered on in the summer season or the afternoon, the temperature rises, and when the air-conditioner is powered on in the winter season, the temperature drops. The power window and the IH cooking heater also exhibit different change attributes between the summer season or the afternoon and the winter season.

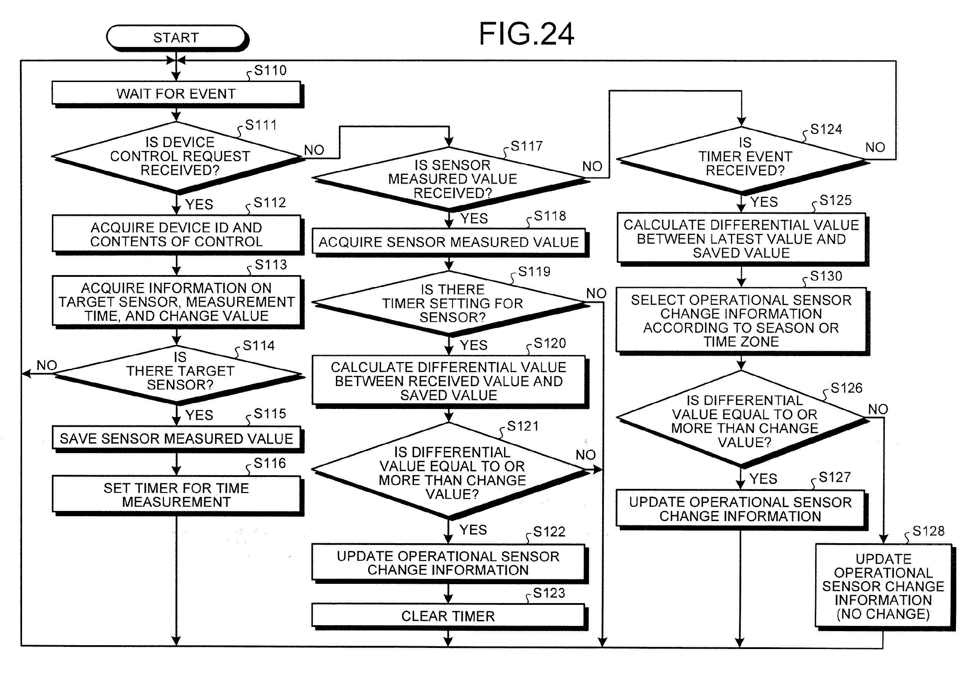

FIG. 24 is a flow diagram for describing a flow of a process for creating the operational sensor change information 106 corresponding to the season or the time zone. The same steps as those illustrated in FIG. 12 are given the same last two digits of numbers as those illustrated in FIG. 12. The process on receipt of a device control request at step S111 and the process on receipt of a sensor measured value at step S117 in FIG. 24 are the same as those in FIG. 12, and thus descriptions thereof will be omitted. The process on receipt of a timer event at step S124 is slightly different from that in FIG. 12.

When receiving a timer event (step S124: Yes), the sensor information acquisition unit 102 transmits to the information change analysis unit 104 the saved value as a sensor measured value during operation of the device and the latest value as a latest sensor measured value. Then, the information change analysis unit 104 calculates the value of a difference between the latest value of the sensor measured value and the saved value of the sensor measured value (step S125). The information change analysis unit 104 then selects the operational sensor change information 106 according to the season or the time zone (step S130). When the difference value exceeds the change value (step S126: Yes), the information change analysis unit 104 updates the selected operational sensor change information 106 to indicate that there is a change in the change attribute of the controlled device 110a (step S127). Meanwhile, when the difference value does not exceed the change value (step S126: No), the information change analysis unit 104 updates the operational sensor change information 106 to indicate that there is no change in the change attribute of the controlled device 110a (step S128).

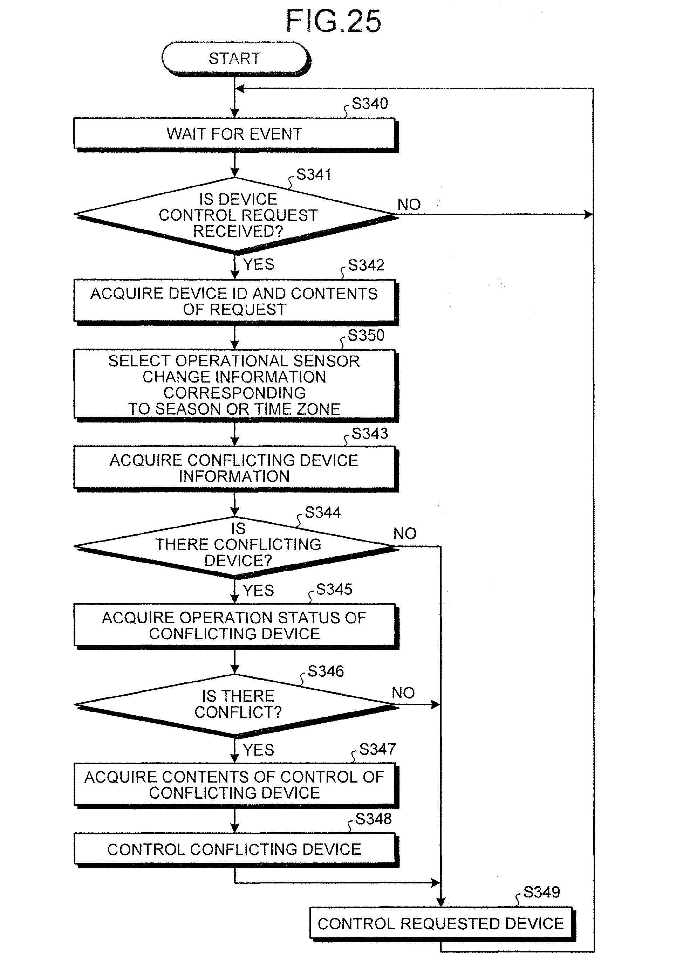

FIG. 25 is a flow diagram for describing a flow of a process for controlling a controlled device based on the operational sensor change information corresponding to the season or the time zone. The same steps as those illustrated in FIG. 13 are given the same last two digits of numbers as those illustrated in FIG. 13. Descriptions of the same steps as those in FIG. 13 will be omitted. As illustrated in FIG. 25, the device control request reception unit 121 enters a state waiting for an event (step S340). Then, when receiving a request for device control from the service 120 (step S341: Yes), the device control request reception unit 121 acquires the device ID of the controlled device 110a as a target of the request and the contents of the request (step S342). Then, the conflicting device information acquisition unit 112 selects the operational sensor change information 106 corresponding to the season or the time zone (step S350). The conflicting device information acquisition unit 112 then acquires information on the conflicting device 110b from the operational sensor change information 106 (step S343).

Then, when determining that the conflicting device 110b exits (step S344: Yes), the conflicting device information acquisition unit 112 acquires the operation status of the conflicting device 110b (step S345). When determining that there is a competition (step S346: Yes), the conflicting device information acquisition unit 112 causes the device control unit 111 to acquire the contents of the control of the conflicting device 110b (step S347). Then, the device control unit 111 controls the conflicting device 110b according to the acquired contents of the control (step S348). The device control unit 111 then controls the controlled device 110a according to the contents of the request (step S349).

In the foregoing embodiments, the control related to temperature adjustment is used as a specific example. However, the present invention is not limited to this but control related to illuminance adjustment may be used. For example, the conflicting device information acquisition unit 112 may specify the conflicting device of an interior lamp as an automatic curtain and control the device such that, when the user wishes to light on the interior lamp during the day, the automatic curtain is closed before lighting of the interior lamp or the like.

### System configuration of a device control system

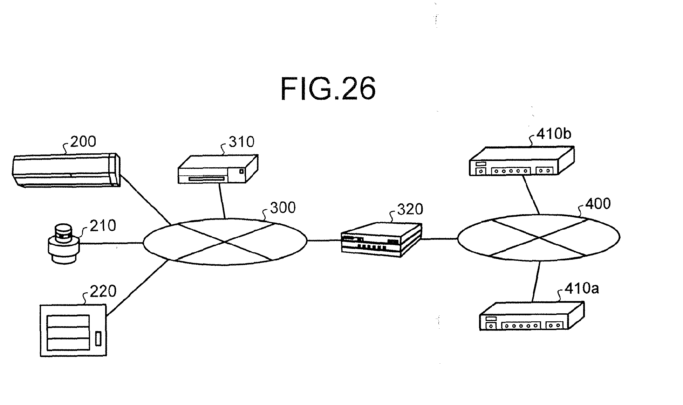

FIG. 26 is a diagram illustrating one example of a system configuration of a device control system. As illustrated in FIG. 26, a home network 300 is connected to an air-conditioner 200, a thermometer 210, an power window 220, and a home gateway 310. Meanwhile, the Internet 400 connected to the home network via a broadband router 320 is connected to a device control server 410a and a device control server 410b. On occurrence of an event, the air-conditioner 200 and the power window 220 each notify a change in operation status by a predetermined communication protocol to the home gateway 310.

The home gateway 310 terminates the communication protocols of the devices connected to the home network 300, and converts the same to a common communication protocol not depending on the devices. Thus, the home gateway 310 can make a request for control to each device even if the devices connected to the home network 300 use different protocols. For example, the home gateway 310 transmits a request for control to the air-conditioner 200 and the power window 220 to execute the requested control.

The broadband router 320 connects together the home network 300 and the Internet 400. The home gateway 310 has communication middleware to mediate among the controlled devices using various communication protocols. The home gateway 310 may operate the service 120 such as "energy-saving service" or "air-conditioning service". A device control server 410 may operate the service 120 such as "energy-saving service" or "air-conditioning service". That is, either the home gateway 310 or the device control server 410 may execute a request for control of the controlled device 110a.

The device control server 410 has communication middleware to communicate with the home gateway 310. Even when the controlled devices such as the air-conditioner 200 and the power window 220 use different communication protocols, the device control server 410 can use the communication middleware to enable utilization of a common interface. Accordingly, the device control server 410 can communicate with the controlled devices without regard to differences in communication protocols.

In general, the device control server 410 doesn't access the respective controlled devices via the Internet 400, but can access the respective controlled devices by setting port forwarding in the broadband router 320. Specifically, the device control server 410 uses prepared conversion data to convert the address of communication data and transmits the communication data to the home gateway 310 with specification of a specific port number of the home gateway 310. Then, the device control server 410 controls the controlled devices via the home gateway 310.

For example, the home gateway 310 accepts an event generated in the air-conditioner 200 when the user powers on or off the air-conditioner 200. Then, the device control server 410 accepts the event from the home gateway 310. The device control server 410 then stores a record of the event in the device operation information 113. For example, the device control server 410 stores an event with "AirConditioner1"as Device ID, "OperationStatus" as Property, and "On" as Value in the device operation information 113. After that, the device control server 410 controls the air-conditioner 200 via the home gateway 310. Control of the controlled device 110a by the device control server 410 will be described below.

When transmitting a request for opening the power window 220 by the "energy-saving service" to the home gateway, the device control server 410 sets "how1" as ID for identification of the home gateway and "Window1" as Device ID. Further, the device control server 410 sets "OperationStatus" as Property and "On" as Value, and invokes an API (application programming interface) related to the communication middleware. In such a manner as described above, the device control server 410 controls the power window via the home gateway 310. Similarly, the device control server 410 may control the power window 220 using the communication middleware included in the home gateway 310.

When transmitting a request for powering on the airconditioner 200 by the "air-conditioning service" to the home gateway, the device control server 410 sets "hgw1" as ID for identification of the home gateway and "airconditioner1" as Device ID. Further, the device control server 410 sets "OperationStatus" as Property and "On" as Value, and invokes the API (application programming interface) related to the communication middleware. In such a manner as described above, the device control server 410 controls the air-conditioner 200 via the home gateway 310. Similarly, the device control server 410 may control the airconditioner 200 using the communication middleware included in the home gateway 310.

According to one embodiment of the present invention, there is an advantage of performing appropriate control on conflicting devices.

## Claims

1. A device control apparatus, comprising:
a memory; and
a processor coupled to the memory, wherein the processor executes a process including:
storing operational sensor change information in which a controlled device, operation status of the controlled device, and change attribute of the controlled device set based on sensor information obtained by collecting a change in sensor measured value at regular time intervals, are associated with one another;
upon acceptance of a request for control of the controlled device, specifying a conflicting device that conflicts with the controlled device in the change attribute related to the operation status, based on the operational sensor change information; and
controlling the specified conflicting device to interpolate the contents of the request so as to eliminate the competition in the operation status between the conflicting device and the controlled device, and then executes the interpolated request.

2. The device control apparatus according to claim 1, wherein the process further includes:
monitoring a change in sensor measured value when detecting a change in operation status of the controlled device,
determining the presence or absence of a change in the change attribute based on the change value of the sensor measured value, and when there is a change in the change attribute, updating the change attribute related to the operation status of the controlled device in the operational sensor change information; and
when a change in the sensor measured value is monitored at the monitoring, storing the sensor information.

3. The device control apparatus according to claim 2, wherein the process further includes:
upon detection of a change in the operation status of the controlled device, the monitoring includes monitoring a change in temperature measured by a sensor,
the determining includes determining the presence or absence of a change in the change attribute based on the change value of temperature, and when there is a change in the change attribute, updates the operational sensor change information, and
when a change in temperature is monitored at the monitoring, collecting the change in temperature at regular time intervals and storing the temperature in the sensor information.

4. The device control apparatus according to claim 1, wherein the process further includes, a first operation status conflicting with the change attribute related to the operation status of the controlled device, and a second operation status not conflicting with the change attribute related to the operation status of the controlled device, when the conflicting device is in the first operation status, the controlling includes controlling the conflicting device to turn from the first operation status to the second operation status to eliminate the competition.

5. The device control apparatus according to claim 1, wherein the process further includes:
acquiring information on installation place of each controlled device, and storing profile information in which the controlled device and the installation place of the controlled device are associated with each other, and
specifying, based on the operational sensor change information and the profile information, a conflicting device that conflicts with the controlled device in the change attribute related to the operation status and matches the controlled device in installation place.

6. The device control apparatus according to claim 1, wherein the process further includes:
acquiring device type of each controlled device, and further storing profile information in which the controlled device and the device type of the controlled device are associated with each other, and
specifying, based on the operational sensor change information and the profile information, a conflicting device that conflicts with the controlled device in the change attribute related to the operation status and matches the controlled device in device type.

7. The device control apparatus according to claim 2, wherein the process further includes:
storing monitoring time information in which a sensor performing measurement, a controlled device with a change detected in the operation status, and a monitoring time during which a change in the sensor measured value is monitored, are associated with one another, and
monitoring includes monitoring a change in the sensor measured value during the monitoring time related to the controlled device associated in the monitoring time information.

8. The device control apparatus according to claim 1, wherein the process further includes, selecting appropriate operational sensor change information out of two or more pieces of operational sensor change information that are created by season or time zone and stored.

9. A device control method executed by a computer, comprising:
storing operational sensor change information in which sensor information obtained by collecting a change in sensor measured value at regular time intervals, a controlled device, operation status of the controlled device, and change attribute of the controlled device set based on the sensor information, are associated with one another;
upon acceptance of a request for control of the controlled device, specifying a conflicting device that conflicts with the controlled device in the change attribute related to the operation status, based on the operational sensor change information; and
interpolating the contents of the request by controlling the specified conflicting device so as to eliminate the competition in operation status between the conflicting device and the controlled device, and then controlling the controlled device, thereby executing the request.

10. A computer-readable storage medium having stored therein a device control program for allowing a computer to execute a process comprising:
storing operational sensor change information in which sensor information obtained by collecting a change in sensor measured value at regular time intervals, a controlled device, operation status of the controlled device, and change attribute of the controlled device set based on the sensor information, are associated with one another;
upon acceptance of a request for control of the controlled device, specifying a conflicting device that conflicts with the controlled device in the change attribute related to the operation status, based on the operational sensor change information; and
interpolating the contents of the request by controlling the specified conflicting device so as to eliminate the competition in operation status between the conflicting device and the controlled device, and then controlling the controlled device, thereby executing the request.

11. A device control system for controlling each controlled device by a device control apparatus via the Internet or a home network, wherein
the device control apparatus comprises:
storing operational sensor change information in which sensor information obtained by collecting a change in sensor measured value at regular time intervals, a controlled device, operation status of the controlled device, and change attribute of the controlled device set based on the sensor information, are associated with one another;
upon acceptance of a request for control of the controlled device, specifying a conflicting device that conflicts with the controlled device in the change attribute related to the operation status, based on the operational sensor change information; and controlling the specified conflicting device to interpolate the contents of the request so as to eliminate the competition between the conflicting device and the controlled device, and then controlling the controlled device, thereby executing the request.
